# EUROPEAN PATENT APPLICATION

(11) **EP 4 269 370 A1**
(43) Date of publication of application: **01.11.2023**
(21) Application number: 23169958.8
(22) Date of filing: 26.04.2023
(51) Int. Cl.: C04B 28/00, C04B 28/04, C04B 111/28

(54) **PROCESS FOR THE PRODUCTION OF ALKALI-ACTIVATED MATERIALS (AAMS), PRODUCTS OBTAINABLE WITH SAID PROCESS AND HEAT INSULATING MATERIALS COMPRISING SAID AAM PRODUCTS**

(30) Priority: 28.04.2022 IT 202200008441
(71) Applicant: Salzano, Giovanbattista, 80132 Napoli (NA) (IT)
(72) Inventor: Salzano, Giovanbattista, 80132 Napoli (NA) (IT)
(74) Representative: Ripamonti, Enrico

(57) **Abstract**

The present invention relates to a process for the production of alkali-activated materials (AAMs), to AAM products obtainable with said process

## Description

Climatic changes that have occurred in recent years have shown the need to develop new industrial processes:
- with high energy efficiency, and
- capable of minimising emissions of carbon dioxide (CO₂) and production of waste.

A possible solution to such problem is to integrate the reuse and recycling of urban and industrial waste; in this manner, there are obtained the advantages of limiting the costs deriving from their treatment and the subsequent discharge at the landfill, and simultaneously minimising the use of non-renewable natural resources.

An eco-friendly innovative method capable of using byproducts deriving from the industrial processes consists in providing materials for alkaline activation. Such materials are known as **"*alkali-activated materials"* (AAMs).** Waste or scrap material which may become part of this production cycle may be different, just like their properties - which in turn depend on the chemical composition - may be different.

The possibility of reintegrating industrial waste within a new production process, through alkaline activation, allows to reduce the emissions of carbon dioxide into the atmosphere, to reduce not only the costs derived from disposal in the landfill, but also those relating to non-renewable raw materials required for the production of new products.

Both dense products and porous materials (with pores having dimensions comprised between millimetres and nanometres) may be obtained through the alkaline activation process.

Using direct and indirect foaming techniques allows to add to the inherent porosity of the alkali-activated material a variable porosity, obtaining materials with a different distribution and size of the pores, depending on the type of application.

Materials characterised by high degree of porosity (>70%) may be therefore obtained, providing three-dimensional porous cellular structures, in which the skeleton consists of the AAMs, the air "vacuum".

Specifically, increasing the degree of porosity allows to obtain materials with lower thermal conductivity, conferring an insulating behaviour to the material.

The alkaline activation reaction occurs starting from:
- **a precursor:** this is a solid material in powdered state, which may have a variable particle size, generally having an aluminium-silicate matrix, and from
- **an activating solution:** this is a liquid phase. The activating solution plays an important role in dissolving the starting materials, leading to the formation of alkaline oxides, which form the chemical species responsible for the formation of reaction products.

The use of hydroxides and silicates, as the activating solution, generates very high pHs, while sulfates and carbonates generate moderate alkaline conditions.

The reaction products strongly depend on the nature and concentration of the activator used [4]. The activators commonly used for the production of ligating materials are sodium hydroxide (NaOH), sodium silicates (Na₂O·rSiO₂), sodium carbonate (Na₂CO₃) and sodium sulfate (Na₂SO₄) solutions [5-8]. Shi and Day [8] found that all caustic alkalis and alkaline compounds, whose anions may react with the ions Ca²⁺ present in the matrix of the precursor, lead to the formation of compounds rich in Ca, less soluble than Ca(OH)₂.

Also the effect of the pH on the activation of calcium content materials is very important and it depends on the type of activator, given that it controls the initial dissolution of the precursor; as a matter of fact, the solubility of calcium decreases as the pH increases, while the solubility of silica and alumina increase. Although NaOH activating solutions tend to have a pH much higher than sodium silicate solutions, with identical concentration of alkalis, similar amounts of precursor react in presence of each of the two types of activator, and the ligands activated by silicate usually develop greater mechanical resistance than the same activated with NaOH [4,9,10]. This is a direct consequence in providing, in the reaction site, a silicate fraction, which - in the presence of Ca²⁺ cations - forms reaction products having a structure typical of a calcium aluminate silicate hydrate [11].

Various studies [12,13-17] confirm the assumption that the primary reaction product formed by the alkaline activation process is a gel with variable final structure depending on the structural recombination that is obtained from the reaction between the precursor and the activator. The secondary products that can be obtained have a structure typical of the aluminate ferrite monosulfates (AFm), primarily found in ligands activated with NaOH [15,18,19]. A very interesting aspect of the alkaline activation process lies in the fact that it allows to obtain porous materials, in a size range comprised between millimetres and nanometres. In the direct foaming technique [20], the semiliquid mixture (slurry), obtained starting from the precursor and activating solution, is expanded through gas incorporation induced **by the foaming agent.**

The porosity of the cellular foams obtained is multidimensional and interconnected, with spherical macropores and ultra-macropores.

The total porosity of the foamed material is proportional to the amount of gas incorporated in the semiliquid suspension during the foaming process.

On the other hand, the size of the pores is determined by the stability of the wet foam, before the solidification occurs. The wet foams are thermodynamically unstable systems, which are subjected to continuous liquid phase draining processes and coalescence. These destabilisation processes significantly increase the size of the incorporated bubbles, determining the formation of large pores in the final cellular microstructure.

The current state of the art consists of studies essentially conducted with low calcium-content aluminosilicate precursors.

Alkaline activation and subsequent formation of porous materials starting from a high calcium oxide content precursor is still subject of studies and experiments and unsuccessful up to now.

With regard to circular economy matters (which includes renewable chemical aspects and sustainable architecture), there actually arises the need for enhancing the use of ash deriving from biomass industrial combustion processes having a matrix with high percentages of calcium oxide, therefore conferring high added value to industrial wastes. Advantageously, the present invention relates to a process which provides for the use of said high calcium oxide-content precursors for the production of alkali-activated materials (AAMs), to AAM products which can be obtained with said process and to heat insulating materials comprising said AAM products, therefore overcoming the current state of the art. A further advantage of the present invention in using high calcium oxide content precursors surprisingly lies in the solidification and setting time of the obtained AAM products. AAM products obtained using a high calcium oxide content precursor show a few-minute setting and solidification time with respect to the setting and solidification time resulting when using low calcium-content precursors, which may even amount to several hours. This factor is linked to greater reactivity of "High calcium" precursors - with respect to silica aluminates - toward alkaline activation. Furthermore, foaming can be obtained and modulated using various foaming agents. The choice of the agent is evaluated by the operator and by the technical expertise.

Still, the resistance of foamed alkali-activated materials to compression is greater than the relative activated compounds having an initial lower calcium oxide content.

### FIGURES

For a better understanding of the present invention, the following drawings are attached hereto, purely by way of non-limiting example, wherein:
Figure 1 shows the micrographs 1.A, 1B, 1C, 1D, 1E - conducted under a SEM (scan electron microscope) - of the samples obtained using the process of the present invention.
Figure 2 shows the XRD (X-ray diffraction) spectrum analysis of the samples obtained with the process of the present invention.
Figure 3 shows the XRD diffraction spectrum analysis of the samples obtained with the process of the present invention.
Figure 4 shows the FT-IR (Fourier Transform IR Spectroscopy) analysis of the samples obtained with the process of the present invention.
Figure 5 shows the TGA (thermogravimetric analysis) of the samples obtained with the process of the present invention.
Figure 6 shows the SEM analysis of the samples 6A, 6B, 6C, 6D, 6E, 6F, 6G, 6H obtained with the process of the present invention.
Figure 7 shows the SEM analysis of samples 7A and 7B and obtained with the process of the present invention.
Figure 8 shows samples of the present invention, in particular:
   - 8A and 8B: samples in cubic moulds measuring 5x5 cm;
   - 8C, 8D, 8E, 8F and 8G: samples with different porosity;
   - 8H and 81: AAM samples measuring 17x10x2 cm.

Below is the detailed description of the present invention.

### DETAILED DESCRIPTION OF THE INVENTION

In an embodiment, the present invention relates to a process for the production of alkali-activated materials (AAMs), said process comprising the steps of:
i) mixing a precursor with an activating solution wherein:
   - said precursor consists of an industrial waste material from biomass combustion comprising a %WT of calcium oxide comprised in the range from 40-70 %wt, preferably 66%wt;
   - said activating solution consists of one or more components selected from the group consisting of: sodium silicate, potassium silicate, sodium carbonate, potassium carbonate, clinker, sodium silicate, sodium hydroxide, and mixtures thereof, preferably said activating solution consists of sodium silicate and sodium hydroxide and wherein preferably
      - said sodium hydroxide has a concentration comprised in the range from 8-15M, in a range comprised from 10-15 %wt, preferably 14 %wt;
      - said sodium silicate is comprised in the range from 16-25 %wt, preferably 20 %wt;
   - said mixing is carried out at a temperature comprised in the range from 20-30°C, preferably 25°C (RT), at a rate comprised in the range from 500-800 rpm, preferably 700 rpm;
ii) adding a foaming agent to the mixture obtained from point i), wherein said foaming agent is selected from the group consisting of: silicon powder, anionic or cationic surfactants, organic peroxides, aluminium powder, hydrogen peroxide, and mixtures thereof, preferably said foaming agent is selected from the group: aluminium powder, hydrogen peroxide or mixtures thereof;
   wherein said foaming agent is present in a range comprised 0.3-1%wt, preferably 0.5%wt;
iii) subjecting the samples obtained from step ii) to a curing process, wherein said curing is carried out at a temperature comprised in the range from 25-50°C, preferably at 40°C, at a controlled humidity.

With regard to humidity, the AAM products of the present invention were placed at a controlled relative humidity equal to 95%.

Curing (hardening of the products) is carried out as follows: after two hours from activation, they were placed in a stove at 40°C and at 95% humidity for 24H. The AAM products were sealed so as to prevent the water contained therein from evaporating suddenly, creating cracks. After 24h, they were kept sealed at room temperature for 7 days. After 7 days, they were opened and ageing and drying continued for about 20 days. Humidity also depends on the external temperature.

After adding the foaming agent, such as aluminium powder or hydrogen peroxide, the following reactions were obtained:

2Al + 6H₂O + 2NaOH -> 2NaAl(OH)₄ + 3H₂

NaAl(OH)4 -> NaOH + Al(OH)₃

2Al + 6H₂O -> 2Al(OH)₃ + 3H₂

With regard to adding aluminium powder, and the following ones with regard to adding the peroxide:

H₂O₂ + OH⁻ -> HO⁻₂ + H₂O

HO⁻₂ + H₂O₂ -> H₂O + O₂ + OH⁻

Preferably, said step ii) further comprises the addition of an additive, wherein said additive is selected from the group consisting of: blast furnace slag, fly ash, glass powder, metakaolin, clinker, silicon sources such as silicon or calcium dioxide, bottom ash and mixtures thereof,
- said additive is present in an amount lower than 10%wt, preferably between 5-8%wt.

Preferably, water can be added to the process of the present invention to improve the processability of the solution obtained. Said water may be added depending on the knowledge and routine expertise of a person skilled in the art.

In another embodiment, the present invention relates to AAM products obtainable with the present process.

In another embodiment, the present invention relates to heat insulating materials comprising the AAM products obtainable with the present process.

Advantageously, the process of the present invention provides for simple and modulated procedures depending on the chemical composition of the precursor, and it uses costeffective commercial reagents.

The AAM products obtainable with the process of the present invention have thermo-physical properties similar to those of products already available on the market and used as heat insulating materials (Gasbeton, Ytong, Siporex etc.) (data reported in Example 7).

However, and advantageously, the preference for AAM materials of the present invention derives from the fact that these AAM products are obtained with an environmentally friendly chemical process which:
- does not involve toxic substances;
- leaves the option of using a broad range of waste starting material such as fly ash or bottom ash,
- allows to obtain products whose thermo-physical properties can be modulated depending on the distribution and size of the pores, and meeting both
the heat comfort and energy saving demand.

Alkaline activation allows to obtain materials that can be solidified at low temperatures with low "CO₂ footprint", with greater sustainability than conventional concrete.

As a matter of fact, literature data shows that the production of 1 ton Portland cement (OPC) releases about 0.87 tons of CO₂, wile 1 ton of AAM produces about 0.16 tons of CO₂, which could be reduced further were waste alkaline activators to be used.

Therefore, the technology of the AAM materials may create options for improving environmental sustainability and engineering performance and therefore profit, therefore attracting the interest and support of the industry, of the legislators and regulators across the world.

Below are some non-limiting exemplifying experiments aimed at better describing the technical aspects and advantages of the present invention.

### EXAMPLES

### EXAMPLE 1 - PRECURSOR COMPOSITION - BIOMASS BOTTOM ASH

Below is an example of a chemical composition of biomass bottom ash used in the process of the present invention. The results are expressed in terms of equivalent oxides.

| Ashes | Al₂O₃ | SiO₂ | P₂O₅ | SO₃ | K₂O | **CaO** | TiO₂ | MnO | Fe₂O ₃ | Cu₂O | ZnO | Sr₂O₃ |
|---|---|---|---|---|---|---|---|---|---|---|---|---|
| %wt | 2.80 | 3.70 | 1.08 | 0.58 | 12.17 | **67.89** | 0.56 | 0.41 | 9.98 | 0.06 | 0.36 | 0.41 |

As observable, the chemical analysis result shows a greater presence of calcium with respect to other elements, in particular with respect to the value of SiO₂ and Al₂O₃.

### EXAMPLE 2 - ACTIVATING SOLUTION - SCANNING ELECTRON MICROSCOPY (SEM) ANALYSIS - MICROGRAPHS

The optimal activating solution for obtaining foamed samples through alkaline activation was studied.

The activating solution used was prepared starting from a sodium hydroxide NaOH base, and sodium silicate (Na₂O·mSiO₂) base using:
- NaOH drops, 98% purity, Carlo Erba Reagents, Italy;
- Sodium silicate, R=1.8, Prochin Italia-Prodotti chimici industriali, Italy;

The chemical/physical characteristics of the sodium silicate solution made by Prochin Italia, and used in the preparation of the activating solution, are reported below.

| **Characteristic** | **Unit of measurement** | **Value** |
|---|---|---|
| Appearance | - | Clear, amber |
| By weight ratio (R) | - | 1.78 |
| Molar ratio (Rm) | - | 1.84 |
| SiO2 | % | 29.50 |
| Na2O | % | 16.50 |
| Density (20°C) | Kg/dm³ | 1.56 |
| Baumè density (20°C) | °Bè | 51.50 |

A sodium hydroxide solution with varying concentrations (8, 12 and 15 M) was used as a second component of the activating solution.

As regards the foaming agent, the following were used at this first stage:
- Aluminium powder, 99.7% purity, Sigma Aldrich, United States;
- 30% hydrogen peroxide solution, Carlo Erba Reagents, Italy.

The following table shows the by weight percentages of the individual components used in the synthesis process.

| **sample** | **precursor** | **8M NaOH [%wt]** | **12M NaOH [%wt]** | **15M NaOH [%wt]** | **Sodium silicate (R=1.8) [%wt]** | **Al powder [%wt]** | **30% H₂O₂ solution [%wt]** |
|---|---|---|---|---|---|---|---|
| CB8MA1 | 65.8 | 13.5 | | | 20.2 | 0.5 | |
| CB8MP | 65.8 | 13.5 | | | 20.2 | | 0.5 |
| CB12MP | 65.8 | | 13.5 | | 20.2 | | 0.5 |
| CB15MP | 65.8 | | | 13.5 | 20.2 | | 0.5 |

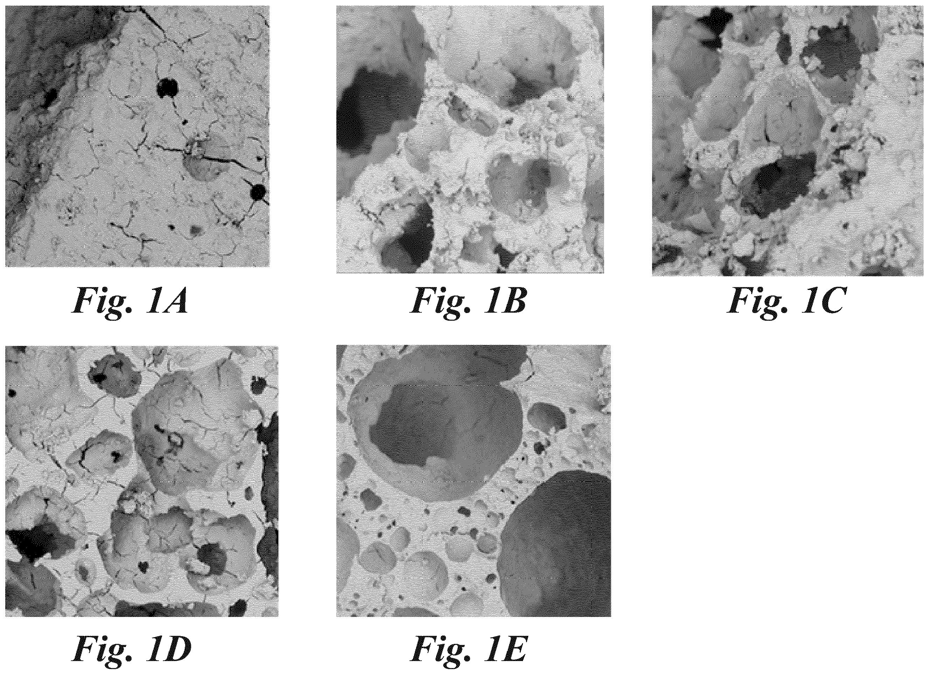

Figure 1 (samples 1, 2, 3, 4, 5) show the micrographs - carried out under the SEM - of the samples obtained with the process of the present invention

In some samples 1 to 5 there can be observed the presence of small pores due to the evaporation of water weakly linked to the phases formed during the activation process; in others, there is observed the presence of pores distributed evenly with dimensions in the order of hundreds of um. In another there can be observed the presence of a less fractured structure with respect to the others. This morphologically different development of porosity, among the various samples, is mainly attributable to the foaming agent, the other reaction parameters being unchanged.

### EXAMPLE 3- X-RAY DIFFRACTION (XRD), INFRARED SPECTROSCOPY (IR), SCANNING ELECTRON MICROSCOPY (SEM) AND THERMOGRAVIMETRIC ANALYSIS (TGA)

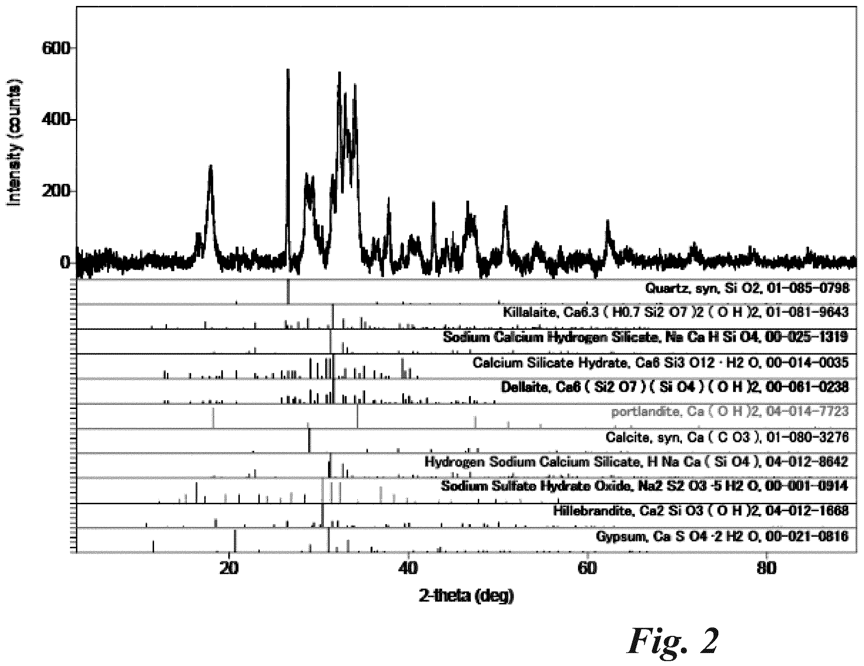

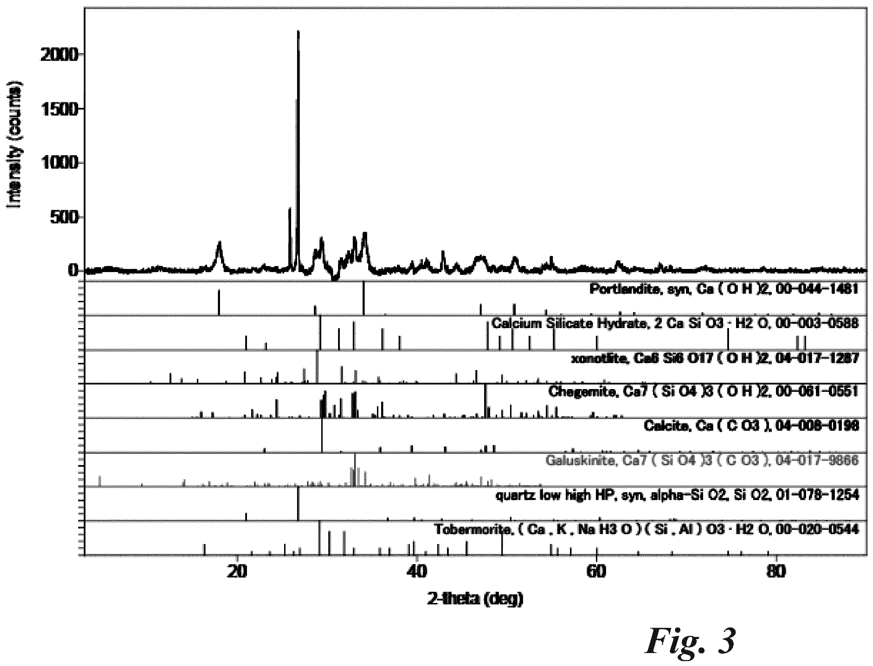

Figures 2 and 3 show the XRD analysis results of the samples obtained with the process of the present invention.

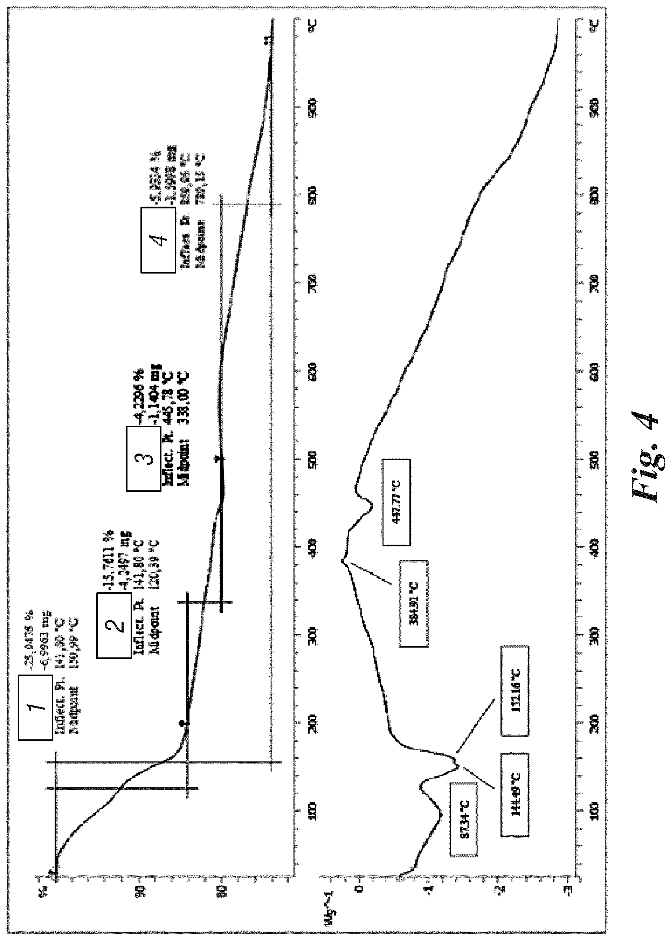

Figure 4 shows the results of the FT-IR analysis of the samples obtained with the process of the present invention.

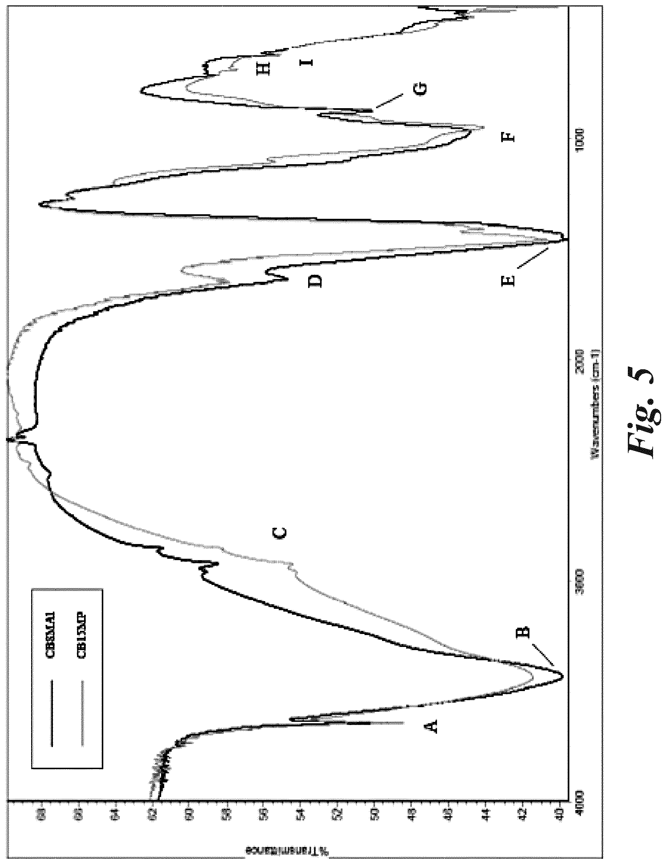

Figure 5 shows the TGA analysis results of the samples obtained with the process of the present invention.

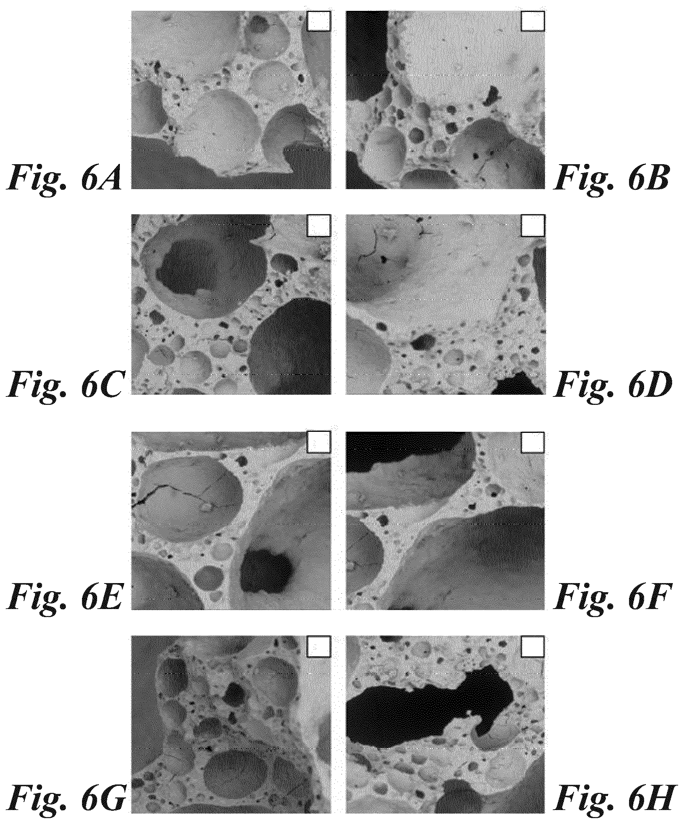

Figure 6 shows the analysis under the SEM (6, 7, 8, 9, 10, 11, 12, 13) of the samples obtained with the process of the present invention.

### EXAMPLE 4 - BULK DENSITY AND OPEN POROSITY ANALYSIS OF THE SAMPLES

In order to assess the synthesized porous structures, an analysis of the bulk density of the samples obtained was carried out.

Below are the data obtained.

| **sample** | **Bulk density [g/cm³]** | **Porosity [vol.%]** |
|---|---|---|
| CBNS (T40) | 0.99 | 0.70 |
| CB8MA1 (T40) | 0.61 | 38.08 |
| CB8MA1 (T60) | 0.58 | 41.75 |
| CB8MP (T40) | 0.58 | 42.13 |
| CB8MP (T60) | 0.58 | 41.71 |
| CB12MP (T40) | 0.58 | 41.80 |
| CB12MP (T60) | 0.51 | 49.01 |
| CB15MP (T40) | 0.53 | 46.43 |
| CB15MP (T60) | 0.46 | 54.03 |

Very low density values, comparable to other similar products available, were obtained.

### EXAMPLE 5 - THERMAL CONDUCTIVITY

Materials obtained with the process of this invention have also been tested for thermal conductivity.

| **sample** | **Thermal conductivity [W/mK]** |
|---|---|
| CB8MA1 (T40) | 0.06 |
| CB8MA1 (T60) | 0.05 |
| CB8MP (T40) | 0.10 |
| CB8MP (T60) | 0.08 |
| CB12MP (T40) | 0.06 |
| CB12MP (T60) | 0.06 |
| CB15MP (T40) | 0.08 |
| CB15MP (T60) | 0.06 |

The samples have very low thermal conductivity values. This aspect can be correlated to the open porosity values that were obtained.

### EXAMPLE 6 - LEACHING ANALYSIS

AAM leaching tests were carried out to verify whether or not there was a possible release of substances not provided for by the legislation in force.

The tests were carried out according to the UNI 10802 standard and according to the method laid down in the UNI EN 12457-2 standard, and the results obtained are reported in the table below.

| **Parameter** | **Result** | **Unit of measurement** | **LQ** | **Limits** |
|---|---|---|---|---|
| **BA** | **<LQ** | mg/L | 0.05 | ≤1 |
| **Cu** | **<LQ** | pg/L | 1 | ≤50 |
| **Zn** | **0.16** | mg/L | 0.01 | ≤3 |
| **Be** | **<LQ** | pg/L | 0.1 | ≤10 |
| **Co** | **<LQ** | pg/L | 0.1 | ≤250 |
| **Ni** | **<LQ** | pg/L | 0.01 | ≤10 |
| **V** | **<LQ** | pg/L | 1 | ≤250 |
| **As** | **<LQ** | pg/L | 1 | ≤50 |
| **Cd** | **<LQ** | pg/L | 0.2 | ≤5 |
| **Total Cr** | **33.4** | pg/L | 1 | ≤50 |
| **Pb** | **<LQ** | pg/L | 2 | ≤50 |
| **Se** | **<LQ** | pg/L | 0.1 | ≤10 |
| **pH** | **14.00** | pH units | 0.01 | [5.5-12.0] |

These values can still be attributed to the optimal synthesis reaction that has occurred.

### EXAMPLE 7 - SAMPLE ANALYSIS FROM OTHER BIOMASS PLANTS - SEM ANALYSIS - THERMAL CONDUCTIVITY

Further experiments were conducted with other samples from different biomass plants. Such samples have shown a chemical composition different from each other and different from that of EXAMPLE 1.

The mixtures were designated by letters (C), (S) and (M). The mixture (S) is characterised by the union of two different types of ashes from two different plants.

The following tables report the data obtained from the chemical analysis of the three plants.
Plant 1

| **BA ashes** | **Al₂O₃** | **SiO₂** | **P₂O₅** | **MgO** | **K₂O** | **CaO** | **TiO₂** | **Na2O** | **Fe₂O₃** |
|---|---|---|---|---|---|---|---|---|---|
| **%wt** | 10.96 | 49.57 | 2.15 | 4.48 | 6.07 | **19.43** | 1.82 | 1.54 | 3.98 |

Plant 2

| **BA ashes** | **Al₂O₃** | **SiO₂** | **C** | **MgO** | **K₂O** | **CaO** | **SO3** | **Na2O** | **Fe₂O₃** | **Cl** |
|---|---|---|---|---|---|---|---|---|---|---|
| **%wt** | 3.16 | 8.68 | 14.47 | 4.98 | 11.78 | **41.32** | 6.39 | 4.12 | 1.94 | 1.79 |

Plant 3

| BA ashes | Al₂O₃ | SiO₂ | P₂O₅ | SO₃ | K₂O | CaO | MgO | N |
|---|---|---|---|---|---|---|---|---|
| **%wt** | 6.15 | 22.53 | 2.19 | 1.50 | 5.31 | **41.87** | 8.22 | 12.26 |

It has been established that the procedure implemented is also well suitable for the latter ash samples apart from small modulations of the mixture according to the physical chemical characteristics of the precursor.

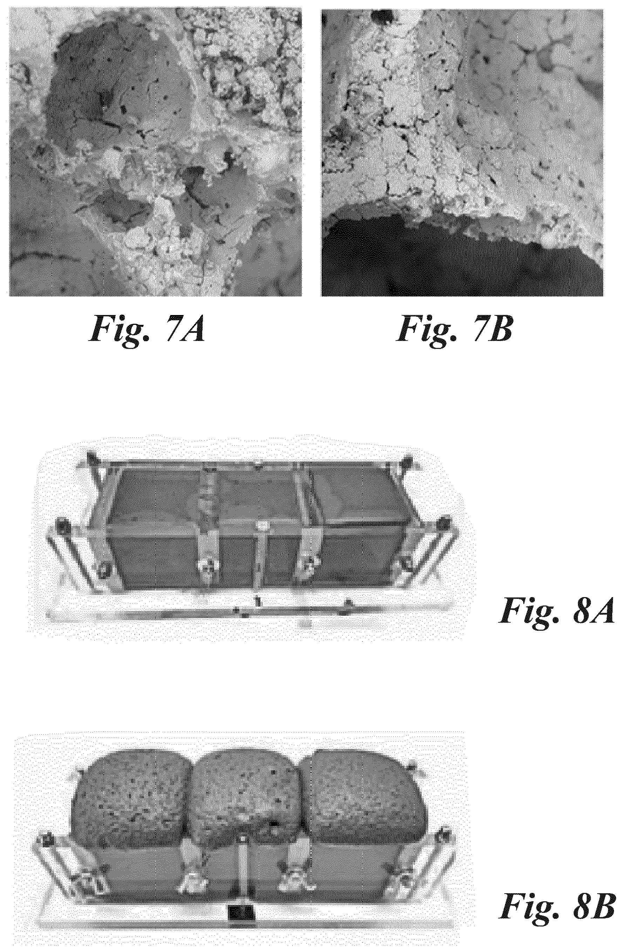

Figure 7 (14 and 15) shows some SEM images of the samples obtained from the trials.

Thermal conductivity, porosity and density data are reported in the following table.

| **sample** | **Bulk density [g/cm³]** | **Porosity [vol.%]** | **Thermal conductivity [W/mK]** |
|---|---|---|---|
| **AAM-C** | 0.62 | 40% | 0.1 |
| **AAM-S** | 0.52 | 54% | 0.08 |
| **AAM-M** | 0.47 | 65% | 0.06 |

### EXAMPLE 8 - COMPARING AAM SAMPLES WITH COMMERCIALLY AVAILABLE PRODUCTS

The following are thermo-physical analyses of AAM samples and products available on the market.

| | **Thermal conductivity (W/mK)** | **Duration in years** | **Density (g/cm3)** | **Energy saving %** |
|---|---|---|---|---|
| cellulose | 0.04 | 12 | 1.5 | 35 |
| Rock wool | 0.03 | 12 | 0.5 | 40 |
| XPS | 0.03 | 20 | 0.3 | 40 |
| EPS100 | 0.03 | 12 | 0.2 | 40 |
| cork | 0.04 | 20 | 0.2 | 40 |
| Aerated concrete | 0.11-0.17 | 40⁽¹⁾ | 0.5-0.8 | 30⁽¹⁾ |
| **AAM** | 0.04-0.08 | 50^{(*)} | 0.4-0.6 | 35^{**} |

| | | | | |
|---|---|---|---|---|
| ¹= Literature data; ^{*}= estimated value with LCA analysis on laboratory samples; ^{**}= estimated values of measured thermo-physical quantities | | | | |

### EXAMPLE 9 - HEAT INSULATING MATERIALS

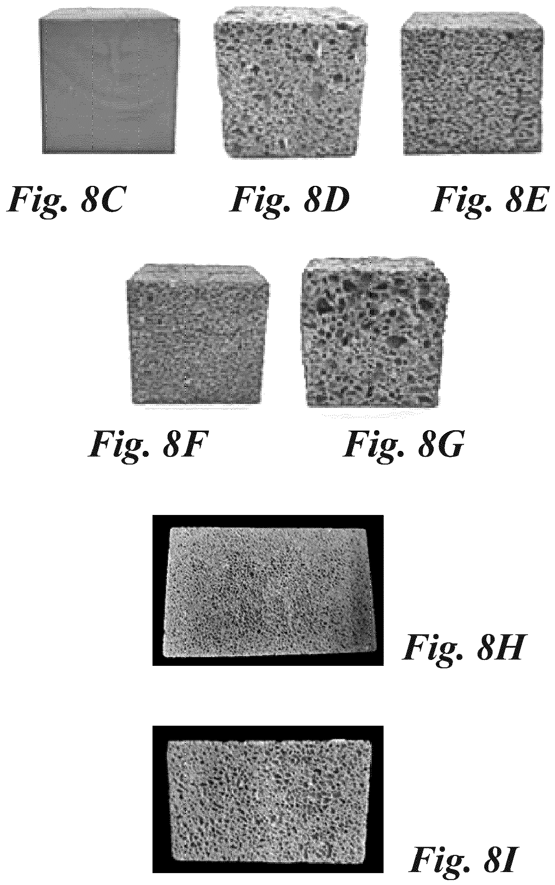

Figure 8 shows some images of different samples of heat insulating material comprising AAM products obtained with the process of the present invention, in particular:
- 16 and 17: samples of cubic moulds measuring 5x5cm
- 18, 19, 20, 21 and 22: samples with different porosity;
- 23 and 24: AAM samples measuring 17x10x2 cm.

### Bibliographic references:

1. Fernàndez-Jimenez A., Puertas F., Alkali-activated slag cements: Kinetic studies. Cement and Concrete Research 27:359-368 (1997).
2. Fernàndez-Jimenez A., Puertas F., ArteagaA., Determination of kinetic equations of alkaline activation of blast furnace slag by means of calorimetric data. Journal of thermal Analysis and Calorimetry 52:945-955(1998).
3. Bernal S. A., Provis J.L., Rose V., Mejia de Gutierrez R., Evolution of binder structure in sodium silicateactivated slag-metakaolin blends. Cement and Concrete Composites 33:46-54(2011).
4. Wang S.D., Scrivener K.L., Pratt P.L., Factors affecting the strength of alkali-activated slag. Cement and Concrete Research 24:1033-1043 (1994).
5. Puertas F., Cementos de escoria activados alcalinamente: situacion actual y persèpectivas de future. Materiales de Construcciòn 45: 53-64 (1995).
6. Shi C., Krivenko P.V., Roy D.M., Alkali-Activated Cements and Concretes. Taylor & Francis, Abingdon (2006).
7. Zivica V., Effects of type and dosage of alkaline activator and temperature on the properties of alkali-activated slag mixtures. Construction and Building Materials 21: 1463-1469 (2007).
8. Shi C., Day R.L., Selectivity of alkaline activators for the activation of slags. Cement and Concrete Aggregates 18: 8-14 (1996).
9. Ben Haha M., Le Saout G., Winnefeld F., Lothenbach B., Influence of activator type on hydration kinetics, hydrate assemblage and microstructural development of alkali activated blast-furnace slags. Cement and Concrete Research 41:301-310 (2011)
10. Fernàndez-Jimenez A., Palomo J.G., Puertas F., Alkali activated slag mortars: Mechanical strength behaviour. Cement and Concrete Research 29:1313-1321 (1999).
11. Fernàndez-Jimenez A., Puertas F., Sobrados I., Sanz J., Structures of calcium silicate hydrates formed in alkalineactivated slag: influence of the type of the type of alkaline activator. Journal of the American Ceramic Society 86: 1389-1394 (2003).
12. Zhou H., Wu X., Xu Z., Tang M., Kinetic study on hydration of alkali-activated slag. Cement and Concrete Research 23: 1253-1258 (1993)
13. Wang S.D., Pu X. C., Scrivener K.L., Pratt P.L., Alkali-activated slag cement and concrete: a review of properties and problems. Advances in Cement Research 7. 93-102 (1195).
14. Escalante-Garcia J.I., Fuentes A.F., Gorokhovsky A., Fraire_luna P.E., Memdoza-suarez G., Hydration products and reactivity of blast-furnace slag activated by various alkalis. Journal American Ceramic Society 86:2148-2153 (2003).
15. Brough A. R., Atkinson A., Sodium silicate based, alkali-activated slag mortars: Part. I Strength, hydration and microstructures Cement and Concrete Research 32: 865-879 (2002).
16. Richardson I.G., Groves G.W., Microstructure and microanalysis of hardened cement pastes involving ground granulated blast-furnace slag. Journal of Material Science 27: 6204-6212 (1992).
17. Myers R.J., Bernal S.A., San Nicolas R., Provis J. L., Generalized structural description of calcium-sodium aluminosilicate hydrate gels: the crosslinked substituted tobermorite model. Langmuir 29: 5294-53069 (2013).
18. Shilling P.J., Butler L.G., Roy A., Eaton H.C., 29Si and 27Al MAS-NMR of NaOH-activated blast furnace slag. Journal of the American Ceramic Society 77: 2363-2368 (1994).
19. Bonk F., Shneider j., Cincotto M.A., Panepucci H., Characterization by multinuclear high-resolution NMR of hydration products in activated blast furnace slag pastes. Journal of the American Ceramic Society 86: 1712-1719 (2003) .
20. Studart A.R., Gonzenbach U.T., Tervoort E., Gauckler L.J., Processing routes to macroporous ceramics: a review. Journal of the American Ceramic Society 89: 1771-1789 (2006) .

## Claims

1. Process for the production of alkali-activated materials (AAMs), said process comprising the steps of:
i) mixing a precursor with an activating solution wherein:
- said precursor consists of an industrial waste material from biomass combustion comprising a %WT of calcium oxide comprised in the range from 40-70 %wt;
- said activating solution consists of one or more components selected from the group consisting of: sodium silicate, potassium silicate, sodium carbonate, potassium carbonate, clinker, sodium silicate, sodium hydroxide, and mixtures thereof, preferably said activating solution consists of sodium silicate and sodium hydroxide and wherein
- said sodium hydroxide has a concentration comprised in the range from 8-15M, in a range comprised from 10-15 %wt;
- said sodium silicate is comprised in the range from 16-25 %wt;
- said mixing is carried out at a temperature comprised in the range from 20-30°C, at a rate comprised in the range from 500-800 rpm;
ii) adding a foaming agent to the mixture obtained from point i), wherein said foaming agent is selected from the group consisting of: silicon powder, anionic or cationic surfactants, organic peroxides, aluminium powder, hydrogen peroxide, and mixtures thereof, preferably said foaming agent is selected from the group: aluminium powder, hydrogen peroxide or mixtures thereof;
wherein said foaming agent is present in a range comprised 0.3-1%wt, preferably 0.5%wt;
iii) subjecting the samples obtained from step ii) to a curing process, wherein said curing is carried out at a temperature comprised in the range from 25-50°C, at a controlled humidity.

2. Process according to claim 1 wherein said precursor comprises a % of calcium oxide equal to 66%wt.

3. Process according to one or more of the preceding claims, wherein said sodium hydroxide is present in a concentration of 14 %wt.

4. Process according to one or more of the preceding claims, wherein said sodium silicate is 20 %wt.

5. Process according to one or more of the preceding claims, wherein said foaming agent is selected from the group: aluminium powder, hydrogen peroxide or mixtures thereof.

6. Process according to one or more of the preceding claims, wherein said curing is carried out at 40°C.

7. Process according to one or more of the preceding claims, wherein said step ii) further comprises adding an additive, wherein
said additive is selected from the group consisting of: blast furnace slag, fly ash, glass powder, metakaolin, clinker, silicon or calcium sources, bottom ash and mixtures thereof,
- said additive is present in an amount lower than 10%wt, preferably between 5-8%wt.

8. AAM products obtainable with the process according to one or more of the preceding claims.

9. Heat insulating materials comprising the AAM products obtainable with the present process.
